# FASCICULE DE BREVET EUROPEEN

(11) **EP 0 277 878 B1**
(45) Date de publication et mention de la délivrance du brevet: **12.10.1994**
(21) Numéro de dépôt: 88400219.7
(22) Date de dépôt: 01.02.1988
(51) Int. Cl.: G02B 6/38

(54) **Dispositif de connexion pour fibres optiques**
Verbindungsvorrichtung für optische Fasern
Connection arrangement for optical fibres

(30) Priorité: 03.02.1987 FR 8701252
(43) Date de publication de la demande: 10.08.1988
(73) Titulaire: COMPAGNIE DEUTSCH (Société Anonyme), 92502 Rueil-Malmaison (FR)
(72) Inventeur: Maillard, Jean-Jacques, F-27600 Fontaine Bellenger (FR); Dubocs, Gérard, F-27370 Thuit-Signol (FR)
(74) Mandataire: Laget, Jean-Loup

(56) Documents cités:
- EP-A- 0 061 423
- GB-A- 2 016 164
- GB-A- 2 022 284
- GB-A- 2 070 799

## Description

L'invention concerne un dispositif de connexion pour fibres optiques, et notamment pour fibres optiques individuelles.

Pour assurer la connexion de deux fibres optiques, on a proposé des dispositifs qui s'apparentent aux connecteurs électriques, c'est-à-dire des dispositifs constitués de deux embouts solidarisables. Il en résulte que ces embouts ne sont pas identiques et doivent être montés sur les fibres optiques dans un ordre déterminé.

On a ensuite réalisé des dispositifs de connexion dans lesquels les fibres optiques sont équipées d'embout du même type, ce qui facilite à la fois la fabrication et le montage des embouts. De tels dispositifs sont décrits par exemple dans le brevet GB-A 2 022 284.

Dans ce dispositif, l'extrémité de la fibre dénudée est recouverte d'un corps maintenu par collage ; cependant si ce corps protège la fibre, notamment avant le montage, cette protection est au détriment de la transmission des signaux optiques, du fait d'une qualité médiocre du contact entre la fibre, la surface de contact n'étant pas réduite à la section des fibres mais à la section fibre + corps de protection.

L'un des buts de l'invention est de proposer un dispositif de connexion grâce auquel :
1° - la fibre est protégée uniquement lorsque l'embout qui l'équipe n'est pas connecté ;
2° - lors de l'arrimage du câble optique, la fibre est auto-centrée sans déplacement radial de son extrémité par rapport à son axe longitudinal au voisinage de la connexion.

On connaît à ce sujet le brevet GB-A 2 070 799 qui décrit un dispositif de connexion pour fibres optiques qui comporte un boîtier de raccordement symétrique, un sous-ensemble de centrage des fibres dans la partie centrale dudit boitier, et deux embouts identiques, chacun traversé par une fibre à mettre en connexion. Les embouts sont cylindriques et comportent une virole creuse dans laquelle le câble est serti, la virole portant à son extrémité un écrou de fixation sur le boîtier; la fibre est protégée par un tube qui coulisse dans la virole entre deux positions sous l'action d'un ressort.

L'invention a pour objectif une simplification des dispositifs de ce type, permettant un montage plus simple et plus rapide.

A cet effet, l'invention a pour objet un dispositif de connexion pour fibres optiques tel que défini à la revendication 1.

Selon d'autres caractéristiques de l'invention :
- la bague comporte vers l'arrière des bras élastiquement déformables munis vers l'intérieur de cliquets susceptibles, d'une part de coopérer avec la nervure et, d'autre part de venir en butée sur l'épaulement;
- la bague comporte intérieurement une nervure longitudinale destinée à coulisser dans une rainure longitudinale correspondante pratiquée à l'avant du corps d'embout sur sa périphérie extérieure;
- le boîtier de raccordement comporte un évidement cylindrique destiné à recevoir l'embout et se prolonge par une partie conique et un passage axial débouchant dans le sous ensemble de centrage, et le corps d'embout vient en butée contre la paroi de fond de l'évidement cylindrique, et que le passage axial est de diamètre réduit, afin de ne laisser passer qu'une seule fibre dénudée;
- l'axe longitudinal de la partie cylindrique est incliné d'un petit angle par rapport à l'axe longitudinal du sous-ensemble de centrage. Cet angle est faible, de l'ordre de 2°;
- le boîtier de raccordement comporte une cavité de logement du sous-ensemble de centrage et latéralement une ouverture pour la mise en place dudit sous-ensemble;
- le sous-ensemble de centrage comporte des moyens mécaniques de centrage des fibres optiques, et un liquide visqueux adaptateur d'indice ;
- les moyens de centrage sont constitués par trois piges usinées, de forme générale cylindrique, présentant des étranglements ;
- les piges ont leurs extrémités coniques pour assurer le guidage des fibres et la retenue du liquide adaptateur d'indice ;
- les moyens de centrage sont constitués par une rainure longitudinale en forme de V transversal, moulée, comportant à chaque extrémité trois billes pour guider l'extrée de la fibre dans le V.
- le boîtier de raccordement comporte inférieurement une embase munie de cliquets susceptible d'être fixée sur un rail ou toute autre plaque recevant une série de boîtiers ;

D'autres caractéristiques de l'invention ressortent de la description qui suit faite avec référence au dessin annexé sur lequel on peut voir :
Figure 1 : une vue schématique en coupe longitudinale d'un dispositif de connexion pour fibres optiques selon l'invention ;
Figure 2 : une vue en coupe longitudinale d'un embout selon l'invention, avec la bague de protection en position de protection ;
Figure 3 : une vue schématique partielle en perspective éclatée de l'embout de la figure 2 ;
Figure 4 : une vue en coupe longitudinale d'un dispositif de connexion selon l'invention avec la bague en position de connexion et l'embout connecté sur le boîtier ;
Figure 5 : une vue schématique partielle en perspective éclatée de l'embout de la figure 4 ;
Figure 6 : une vue en coupe longitudinale d'un premier mode de réalisation du sous-emsemble de centrage du dispositif de connexion à deux centreurs ;
Figure 7 : une vue en coupe longitudinale d'un deuxième mode de réalisation de ce sous-ensemble, à quatre centreurs ;
Figure 8 : une vue en coupe longitudinale d'un troisième mode de réalisation de ce sous-ensemble de la figure 1, à dix huit billes ;
Figure 9 : une vue de côté, dans le plan radial médian, du sous-ensemble de centrage de la figure 8 ;
Figure 10 : une vue en perspective avec arrachement d'un quatrième mode de réalisation du sous-ensemble de centrage, à trois piges ;
Figure 11 :une vue de côté du sous-ensemble de centrage de la figure 10 ;
Figure 12 : une vue en coupe longitudinale d'un cinquième mode de centrage avec V et billes ;
Figure 13 : une vue de côté du sous-ensemble de centrage de la figure 12.

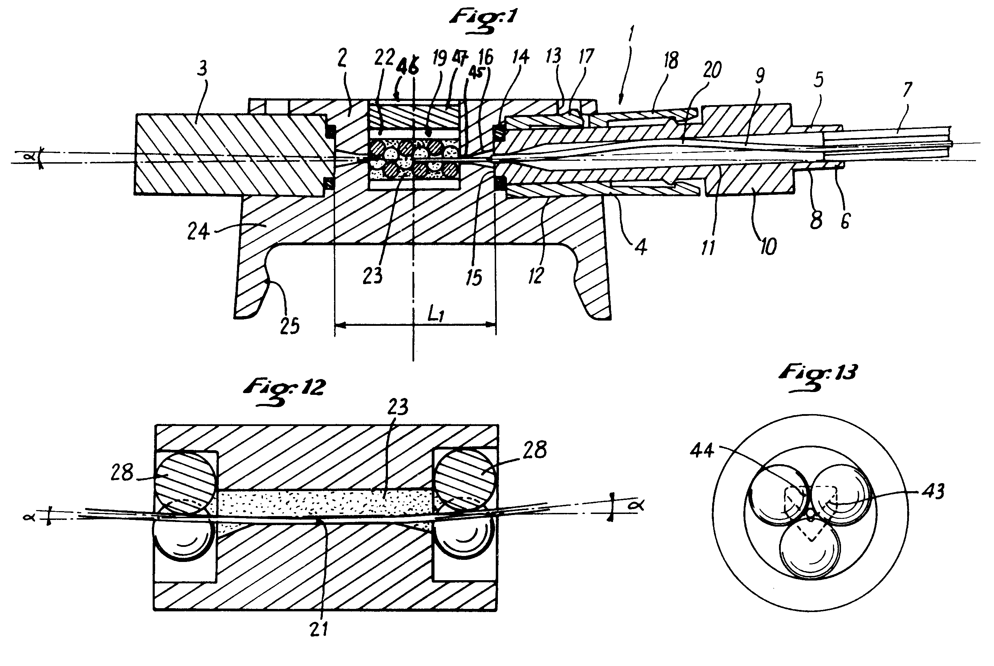

En se reportant à la figure 1, on voit que le dispositif de connexion selon l'invention se compose essentiellement de trois pièces :tout d'abord, pour chacune des deux fibres optiques à raccorder ,d'un embout 1, et ensuite d'un boîtier de raccordement 2, symétrique , comportant en son centre un sous-ensemble de centrage 19 et recevant les deux embouts 1. Une particularité de ce boîtier de raccordement 2 est qu'en l'absence d'embout, il est muni de bouchons de protection 3. Sur la figure 1, le boîtier de raccordement porte un embout 1 et un bouchon de protection 3.

Le boîtier de raccordement, les embouts et les bouchons de protection sont avantageusement constitués en matière plastique et réalisés par moulage par injection.

Chaque embout 1 est de forme générale cylindrique (figure 2), et comporte à l'avant une bague 4 cylindrique de protection de l'extrémité de la fibre 9 et, coulissant dans la bague, un corps d'embout 10 avec à l'arrière une extrémité 5 cylindrique et de diamètre réduit pour permettre un sertissage , en 6 sur le revêtement mécanique du câble optique 7, et en 8 sur la fibre optique 9 elle-même ,qui est muni d'un élastomère de protection 50. Le corps d'embout 10 est muni d'une chambre intérieure 11, traversée longitudinalement par la fibre optique 9 qui a été dénudée, et qui fait saillie au-delà de l'extrémité du corps d'embout 10 d'une longueur prédéterminée . La fibre 9 est coupée très précisément à une longueur L à partir de l'extrémité avant 51.

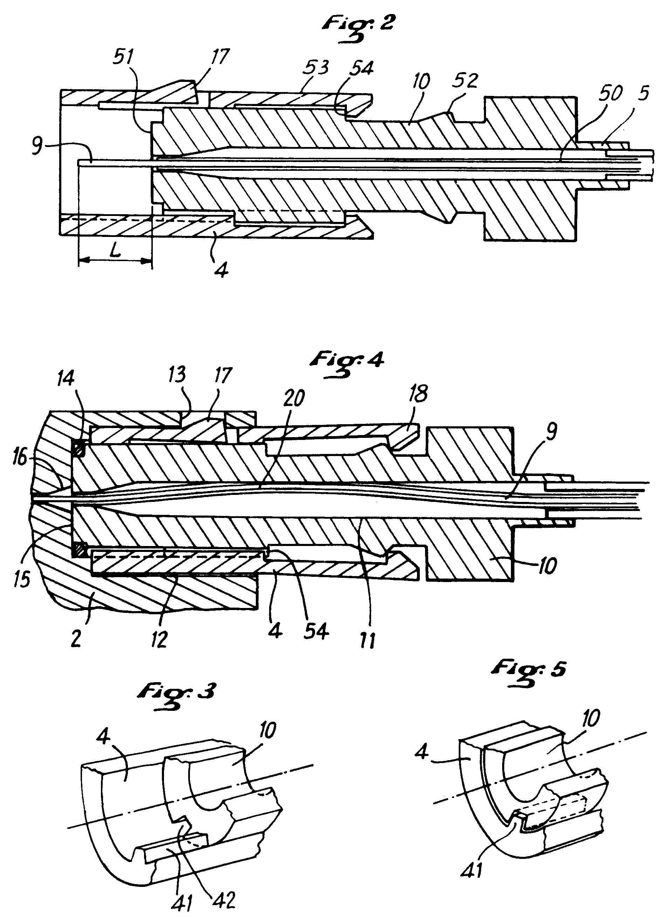

La bague 4 a pour fonction d'assurer la protection de la fibre 9 lorsque l'embout 1 sur lequel elle est montée n'est pas connecté sur le boîtier 2. Cette bague est donc prévue pour prendre deux positions longitudinales extrémes:
- une position longitudinale avant de protection de la fibre : la bague par coulissement sur le corps est déplacée vers l'avant, sur une longueur telle que l'extrémité de la fibre faisant saillie d'une longueur L est au moins complètement protégée par la bague. Cette longueur L est au moins légèrement inférieure à la course de déplacement de la bague vers l'avant comptée depuis la face 51 du corps d'embout 10 ;
- une position longitudinale arrière de connexion : le corps d'embout 10 glissant dans la bague (figure 3) découvre l'extrémité de la fibre qui peut ainsi être mis en connexion dans le sous-ensemble de centrage 19.

La bague et le corps d'embout comportent des moyens de verrouillage correspondant à chacune des deux positions extrêmes :
- le corps d'embout 10 comporte vers l'arrière une nervure annulaire 52 ;
- la bague 4 comporte des bras 53 élastiquement déformables, et munis à leur extrémité, vers l'intérieur, de cliquets 18 susceptibles de coopérer avec la nervure annulaire 52 pour l'immobiliser sur l'embout en position de connexion (figure 4). Cette position est dite "de déverrouillage de la protection";
- d'autre part, le corps d'embout 10 comporte à l'avant, sur sa périphérie, une rainure longitudinale 42 et la bague 4 comporte intérieurement une nervure longitudinale 41 susceptible, par déplacement longitudinal de la bague, de pénétrer dans la rainure 42 ou d'en sortir et de venir, par rotation autour du corps d'embout, en butée sur l'extrémité avant 51 du corps d'embout 10 pour l'immobiliser en position de protection (figures 2, 3, 5).

En outre, le corps d'embout comporte un épaulement annulaire 54 sur lequel les bras 53 viennent en butée lorsque la bague se déplace vers l'avant, de telle sorte que, lorsque la bague 4 est en position de protection, la nervure 41 étant en butée contre l'extrémité 51, la bague est immobilisée longitudinalement et ne peut s'échapper du corps d'embout 10. Cette position est dite "de verrouillage de la protection".

Enfin, la bague comporte un bras élastiquement déformable et muni à son extrémité vers l'extérieur d'un cliquet 17 de verrouillage sur le boîtier.

Le boîtier de raccordement 2 est symétrique par rapport à son plan transversal médian. Il comprend une partie cylindrique 12, destinée à recevoir l'embout 1 dont l'axe longitudinal est légèrement incliné d'un angle α par rapport à l'axe longitudinal du sous-ensemble de centrage 19. De préférence, cet angle est faible et de l'ordre de 2°.

A l'intérieur, cette partie cylindrique :
- comporte sur sa paroi latérale un évidement ou un trou 13, destiné à recevoir le cliquet 17 de fixation porté par la bague 4, et sur sa paroi de fond 15, un joint d'étanchéité 14,
- se prolonge par une partie conique 16. Chacune des deux parties coniques 16 se prolonge par un passage axial 45 débouchant dans le sous-ensemble de centrage 19, qui se trouve dans la zone centrale du boîtier de raccordement 2. Le passage est de diamètre réduit afin de ne laisser passer qu'une seule fibre dénudée.

La mise en place de l'embout 1 s'effectue de la façon suivante :
La bague de protection 4 est insérée en position de verrouillage, dans la partie cylindrique 12. Lorsqu'elle arrive en butée sur le fond du cylindre, le cliquet 17 maintient la bague 4 sur le boîtier 2 et celle-ci peut être déverrouillée de sa position par une rotation du corps d'embout 10.

Lorsque la bague est déverrouillée, le corps d'embout glisse à l'intérieur de celle-ci jusqu'à ce que l'extrémité 51 vienne en butée sur le fond 15, et les cliquets 18 retiennent alors le corps d'embout en position connectée. Pour retirer l'embout 1, il faut tirer sur le corps d'embout 10 pour dégager les cliquets 18, la bague 4 étant toujours bloquée dans le boîtier 2.

Lorsque les cliquets 18 arrivent en butée sur l'épaulement 54, une rotation du corps d'embout permet de mettre la bague en position de verrouillage sur le corps d'embout grâce à la nervure 41, celle-ci n'étant plus dans la rainure 42, et de dégager le cliquet 17. Une légère traction permet ensuite de retirer l'embout 1, la bague étant bloquée. Le cliquet 17 est bloqué dans le trou 13 lorsque la bague 4 n'est pas verrouillée sur le corps d'embout 10; lorsque le corps d'embout 10 est en butée sur le fond 15, les cliquets 18 retiennent le corps d'embout, et le maintiennent en position coaxiale.

Un boîtier de raccordement 2 selon l'invention se trouve garni de bouchons de protection 3 sur ses deux entrées à l'issue de sa fabrication. Chacun de ces bouchons ne sera enlevé qu'au moment de la mise en place d'un embout. Ainsi, dans le cas de la figure 1, le boîtier 2 a reçu un seul embout 1, et le bouchon 13 assure la protection de la voie en attente.

Lorsqu'un embout est mis en place, l'extrémité de fibre nue qui dépasse à son extrémité est tout d'abord guidée par le cône 16 vers le sous-ensemble de centrage 9, décrit plus loin. Lorsque le deuxième embout est mis en place, les deux fibres nues viennent en contact au milieu du sous-ensemble de centrage 19. La distance L1 (figure 1) , entre les deux fonds 15 , étant légèrement inférieure au double de la longueur L de chaque fibre au-delà de l'extrémité avant 51 du corps d'embout (figure 4), il en résulte un léger flambage des fibres dans les chambres 11 des embouts. L'angle α de chaque embout par rapport à l'axe du sous-ensemble de centrage 19, permet aux deux fibres en contact de se retrouver du même côté de l'élément de centrage, ce qui diminue très sensiblement le mésalignement axial dû aux différences de diamètre des fibres optiques, ainsi que les différences de concentricité et cylindricité. Sur la figure 1, on a représenté en 20 la position qu'aurait la fibre 7 si l'autre embout était en place.

Le sous-ensemble de centrage 19 est essentiellement constitué d'une enveloppe cylindrique 27 à l'intérieur de laquelle se trouvent des moyens de centrage des fibres, tels que des rubis artificiels, des billes, des piges usinées, ou en V et un liquide 23 adaptateur d'indice. Ce liquide, d'indice compris entre 1,4 et 1,5, a une très grande viscosité pour assurer une retenue suffisante dans la cavité du sous-ensemble de centrage 19, par les tensions superficielles.

Cette enveloppe cylindrique 27 est logée dans une cavitée 22 du boîtier 2.

En outre une ouverture latérale 46 est pratiquée dans le boîtier pour mettre en place ladite enveloppe cylindrique. Cette ouverture permet d'accéder au sous-ensemble de centrage à tout moment, et de remplacer facilement le sous-ensemble en place par un autre ou ses éléments disposés à l'intérieur. Cette ouverture est fermé par une plaque ou autre 47 amovible.

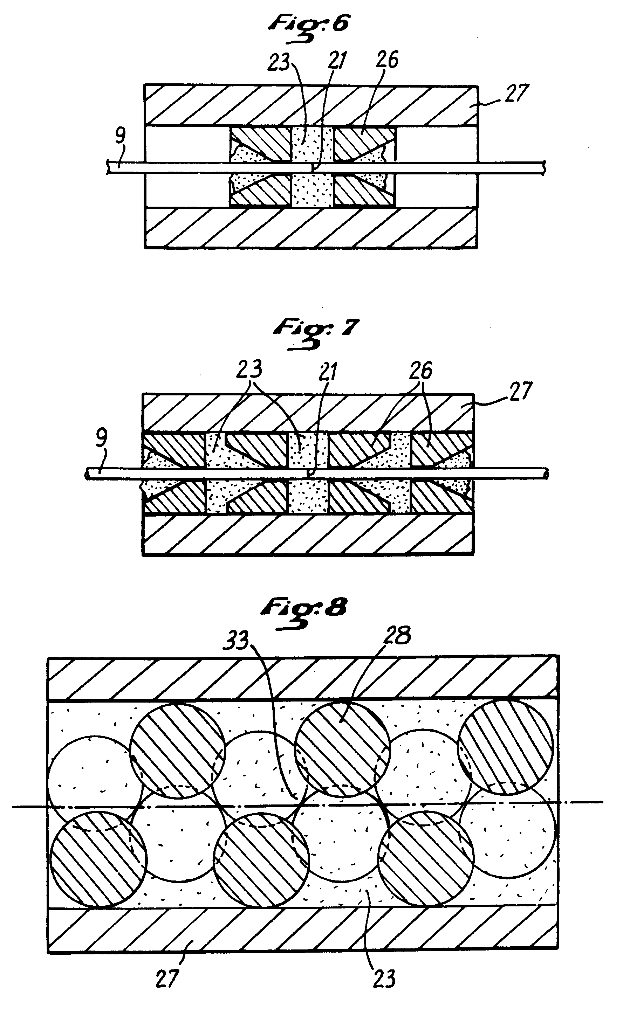

Plus précisément, le sous-ensemble de centrage est cconstitué d'un tube 27 (figure 6) , de diamètre extérieur fixe pour assurer l'interchangeabilité du sous-ensemble, et d'éléments de centrage disposés à l'intérieur du tube. Ces éléments de centrage peuvent être de plusieurs sortes. Selon un premier mode de réalisation (figure 6), deux centreurs ou rubis synthétiques 26, présentant chacun un passage axial et une face en cône rentrant tournée vers l'extérieur afin de faciliter le guidage des extrémités des fibres nues 9, sont espacés afin d'admettre entre eux une réserve de liquide 23. Dans ce liquide, baigne le plan d'appui 21 des faces optiques des deux fibres en connexion, et l'angle d'inclinaison des embouts, donc de la fibre assure un appui des fibres sur une même génératrice.

L'exemple de réalisation de la figure 6 est bien adapté lorsque les fibres ont un diamètre supérieur à 85 µm environ, c'est-à-dire lorsque ce sont des fibres de gros coeur. En revanche, pour les fibres de petit coeur, de diamètre inférieur à 85 µm, il est préférable d'utiliser le sous-ensemble de centrage de la figure 7, à quatre centreurs, le plan d'appui 21 étant toujours au milieu, et deux centreurs 26 étant prévus pour chaque extrémité de fibre 9. Ces deux centreurs sont identiques, décalés l'un de l'autre et séparés par le liquide visqueux 23 qui remplit pratiquement tout l'espace libre dans le tube 27.

Dans les modes de réalisation des figures 6 et 7, le diamètre intérieur des centreurs est déterminé à la construction en fonction du diamètre des fibres optiques dont il faut assurer la connexion.

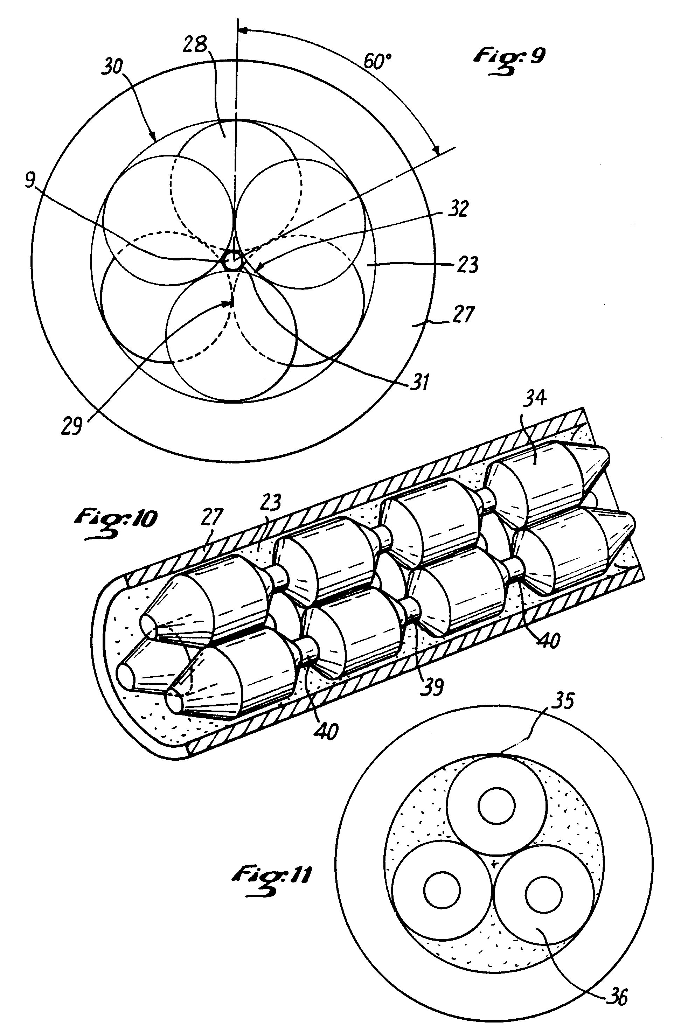

Le troisième mode de réalisation du sous-ensemble de centrage (figures 8 et 9) utilise un jeu de dix-huit billes de centrage identiques 28 disposées à l'intérieur de l'alésage 30 du tube 27. Les billes sont réparties en six couches de trois billes chacune. Dans chaque couche, chaque bille a un point de contact 29 avec les deux autres. Au centre, il y a un espace intersticiel 31 pour le passage des fibres 9.

Deux couches adjacentes de billes sont décalées de 60° ce qui fait que toutes les couches sont fixes et autocentrées. En raison de la symétrie de l'ensemble, la fibre 9 ne peut plus être bloquée, lors de son insertion, dans un espace hypocycloïdal tel que 32. En outre, l'empilage des billes étant très régulier, peut être facilement automatisable.

Tout l'espace intérieur du tube 27, en dehors des billes, est rempli du liquide 23 adaptateur d'indice. En raison de la symétrie du sous-ensemble de centrage, le plan d'appui 21 des deux extrémités de fibres se situe dans une zone 33 entre les plans médians radiaux de deux couches de billes, ce qui assure la présence du liquide 23, l'ange d'inclinaison α assurant une meilleure connexion en ce que les deux fibres en contact sont d'un même côté de l'espace.

Le quatrième mode de réalisation (figures 10 et 11) utilise comme moyen de centrage ,non pas des billes mais des piges 34 usinées, de forme générale cylindrique, régulièrement réparties dans le tube 27, avec leurs axes parallèles à l'axe du tube 27. Leurs surfaces extérieures 35 sont en contact deux à deux et chacune avec la surface intérieure du tube, de sorte que dans l'axe du tube 27 est ménagé un espace intersticiel 36 permettant l'insertion des fibres optiques. Selon l'invention, chaque pige 34 est munie de trois étranglements régulièrement répartis sur la longueur : l'un 39 au milieu, et les deux autres 40 de part et d'autre (figure 10). L'espace compris entre les trois piges et le tube 27, est rempli du liquide adaptateur d'indice 23. Les extrémités des piges et les parties de raccordement entre les parties à grand diamètre 37 et les étranglements 39, 40 sont tronconiques pour faciliter le guidage des fibres.

La forme particulière des piges, avec étranglements , permet d'avoir une plus grande réserve de liquide, ce qui autorise un certain nombre de retraits des deux fibres sans altération notable des pertes de puissance optique dues à la connexion, et l'angle d'inclinaison permet aux fibres de se retrouver dans une forme équivalente à un V. Il suffit d'orienter le sous-ensemble de centrage 19.

De même, les dimensions transversales des piges peuvent varier en fonction du diamètre extérieur des fibres optiques à mettre en connexion.

Le cinquième mode de réalisation (figures 12 et 13) utilise comme moyen de centraged un V43 longitudinal muni à chaque extrémité de trois billes 28, afin de guider correctement la bille au moment de la connexion. Ce V, est de préférence moulé, et comporte un volume 44 de section triangulaire pour retenir le liquide 23 dans la zone de connexion. L'angle d'inclinaison α permet un alignement parfait par l'appui des deux fibres sur les deux plans inclinés du V.

En outre le boîtier de raccordement 2 comporte sur sa face inférieure une embase 24 munie de cliquets 25, susceptible d'être fixée sur un rail ou toute autre plaque, non représentée, destinée à recevoir une série de boitiers 2 analogues.

## Revendications

1. Dispositif de connexion pour fibres optiques, du type comportant deux embouts identiques (1) de forme générale tubulaire pour recevoir chacun l'une des fibres à connecter; et un boîtier de raccordement (2) symétrique, muni dans sa partie centrale d'un sous-ensemble de centrage (19), pour recevoir respectivement de part et d'autre lesdits deux embouts porteurs des deux fibres à connecter; chaque embout comportant un corps d'embout tubulaire avec une extrémité arrière tubulaire de diamètre extérieur réduit pour assurer un sertissage sur le et/ou les revêtements de protection de la fibre correspondante; chaque embout comportant en outre une bague de fixation sur le boîtier de raccordement, ainsi qu'un organe tubulaire de protection de la fibre, monté coulissant à l'extrémité avant (51) du corps d'embout (10), entre une position longitudinale avant pour laquelle ledit organe de protection est destiné à protéger l'extrémité (9) dénudée de la fibre avant connexion et une position longitudinale arrière pour laquelle ledit organe est destiné à dégager l'extrémité dénudée de la fibre lors de la mise en place de l'embout (1) dans le boitier de raccordement, ledit corps comportant un épaulement annulaire (54) destiné à limiter la course de sortie de l'organe de protection en position longitudinale avant, caractérisé en ce que la bague de fixation et l'organe de protection sont constitués par une pièce tubulaire unique (4) montée coulissante autour du corps d'embout, ladite pièce tubulaire unique (4) de protection/ fixation comportant des premiers moyens d'encliquetage (17) pour assurer sa fixation audit boitier de raccordement en position de connexion, ainsi que des seconds moyens d'encliquetage (18) destinés à coopérer, en position longitudinale arrière de ladite pièce tubulaire, avec une nervure annulaire extérieure (52) dudit corps d'embout (10) de façon à retenir ce corps en position de connexion.

2. Dispositif de connexion pour fibres optiques selon la revendication 1, caractérisé en ce que la pièce tubulaire de protection/fixation (4) comporte vers l'arrière des bras (53) élastiquement déformables munis vers l'intérieur de cliquets (18) susceptibles, d'une part dans ladite position longitudinale arrière de coopérer avec la nervure (52), et, d'autre part dans ladite position longitudinale avant de venir en butée sur l'épaulement (54), lesdits cliquets (18) constituant lesdits seconds moyens d'encliquetage.

3. Dispositif selon la revendication 1, caractérisé en ce que la pièce tubulaire de protection/fixation (4) comporte intérieurement une nervure longitudinale (41) destinée à coulisser dans une rainure longitudinale (42) correspondante pratiquée à l'avant du corps d'embout (10) sur sa périphérie extérieure.

4. Dispositif selon la revendication 2, dans lequel le boîtier de raccordement (2) comporte un évidement cylindrique (12) destiné à recevoir l'embout (1) et se prolonge par une partie conique (16) et un passage axial (45) débouchant dans le sous-ensemble de centrage, caractérisé en ce que le corps d'embout (10) vient en butée contre la paroi de fond (15) de l'évidement cylindrique (12), et que le passage axial (45) est de diamètre réduit, afin de ne laisser passer qu'une seule fibre dénudée.

5. Dispositif selon la revendication 4, caractérisé en ce que l'axe longitudinal de l'evidement cylindrique (12) est incliné d'un petit angle par rapport à l'axe longitudinal du sous-ensemble de centrage (19).

6. Dispositif selon la revendication 5, caractérisé en ce que l'angle (α) d'inclinaison est de l'ordre de 2°.

7. Dispositif selon la revendication 1, dans lequel le boîtier de raccordement comporte une cavité destinée à loger le sous-ensemble de centrage caractérisé en ce que le boîtier (2) comporte latéralement une ouverture (46) pour la mise en place dudit sous-ensemble.

8. Dispositif selon la revendication 1, caractérisé en ce que le sous-ensemble de centrage (19) comporte des moyens mécaniques de centrage et un liquide (23) visqueux adaptateur d'indice.

9. Dispositif selon la revendication 8, caractérisé en ce que les moyens de centrage sont constitués par trois piges (34) usinées, de forme générale cylindrique, présentant des étranglements (39,40).

10. Dispositif selon la revendication 9, caractérisé en ce que les piges (34) ont leurs extrémités coniques pour assurer le guidage des fibres (9) et la retenue du liquide (23) adaptateur d'indice.

11. Dispositif selon la revendication 8, caractérisé en ce que les moyens de centrage sont constitués par une rainure longitudinale en forme de V transversal (43), moulée, comportant à chaque extrémité trois billes pour assurer le guidage de la fibre dans le V.

12. Dispositif selon la revendication 1, caractérisé en ce que le boîtier de raccordement (2) comporte inférieurement une embase (24) munie de cliquets (25) susceptible d'être fixée sur un support en forme de rail recevant une série de boîtiers.

## Claims

1. A connection device for optical fibres, of the type having two identical connectors (1) of generally tubular form each for receiving one of the fibres to be connected; and a symmetrical connection housing (2) provided in its central portion with a centering sub-assembly (19), for receiving respectively at either side the two connectors carrying the two fibres to be connected; each connector having a tubular connector body with a rear tubular end of reduced external diameter to ensure crimping on the protective covering and/or coverings of the corresponding fibre; each connector furthermore having a ring for fixing on the connection housing, as well as a tubular protective member for the fibre, slidably mounted at the forward end (51) of the connector body (10), between a forward longitudinal position for which the protective member is intended to protect the bared end (9) of the fibre before connection and a rear longitudinal position for which the member is intended to disengage the bared end of the fibre when the connector (1) is positioned in the connection housing, the body having an annular shoulder (54) intended to limited the outgoing travel of the protective member in the forward longitudinal position, characterised in that the fixing ring and the protective member are constituted by a single tubular part (4) slidably mounted about the connector body, the single tubular protective fixing part (4) having first snap-locking means (17) to ensure its fixing to the connection housing in the connecting position, as well as second snap-locking means (18) intended to cooperate, in the rear longitudinal position of the tubular part, with an external annular rib (52) of the connector body (10) so as to hold this body in the connecting position.

2. A connection device for optical fibres according to Claim 1, characterised in that the tubular protective/fixing part (4) has towards the rear, resiliently deformable arms (53) provided towards the interior of the catches (18) able, on the one hand in the rear longitudinal position to cooperate with the rib (52), and, on the other hand in the forward longitudinal position to come into abutment on the shoulder (54), the catches (18) constituting the second snap-locking means.

3. A device according to Claim 1, characterised in that the tubular protective/fixing part (4) has internally a longitudinal rib (41) intended to slide in a corresponding longitudinal groove (42) formed in the front of the connector body (10) on its external periphery.

4. A device according to Claim 2, in which the connection housing (2) has a cylindrical cavity (12) intended to receive the connector (1) and is extended by a conical portion (16) and an axial passage (45) opening into the centering sub-assembly, characterised in that the connector body (10) comes into abutment against the base wall (15) of the cylindrical cavity (12), and that the axial passage (45) is of reduced diameter, in order to allow only a single bared fibre to pass.

5. A device according to Claim 4, characterised in that the longitudinal axis of the cylindrical cavity (12) is inclined at a small angle with respect to the longitudinal axis of the centering sub-assembly (19).

6. A device according to Claim 5, characterised in that the angle (α) of inclination is of the order of 2°.

7. A device according to Claim 1, in which the connection housing has a cavity intended to house the centering sub-assembly, characterised in that the housing (2) has laterally an opening (46) for positioning the sub-assembly.

8. A device according to Claim 1, characterised in that the centering sub-assembly (19) has mechanical centering means and a viscous liquid for index adaptation (23).

9. A device according to Claim 8, characterised in that the centering means are constituted by three machined rods (34), of generally cylindrical form, having constrictions (39,40).

10. A device according to Claim 9, characterised in that the rods (34) have conical ends to ensure the guiding of the fibres (9) and the retention of the liquid for index adaptation (23).

11. A device according to Claim 8, characterised in that the centering means are constituted by a moulded longitudinal groove (43) in the form of a transverse V, having three balls at each end to ensure the guiding of the fibre in the V.

12. A device according to Claim 1, characterised in that the connection housing (2) has in a low position a base (24) provided with catches (25) adapted to be fixed on a support in the form of a rail receiving a series of housings.

## Patentansprüche

1. Verbindungsvorrichtung für optische Fasern, bei der zwei identische Ansatzteile (1) von allgemein rohrförmiger Gestalt zur Aufnahme jeweils einer der zu verbindenden Fasern und ein symmetrisches Verbindungsgehäuse (2), das in seinem Mittelbereich mit einer Unterbaugruppe (19) zum Zentrieren versehen ist, zur beidseitigen Aufnahme der die beiden zu verbindenden Fasern tragenden Ansatzteile vorgesehen sind, wobei jedes Ansatzteil einen ringförmigen Ansatzteil-Körper mit einem ringförmigen, rückseitigen Ende mit verkleinertem Außendurchmesser zum Sicherstellen einer Befestigung an dem Schutzmantel und/oder den Schutzmänteln für die betreffende Faser und ferner einen Ring zur Befestigung auf dem Verbindungsgehäuse sowie eine rohrförmige Schutzeinrichtung für die Faser aufweist, wobei die Schutzeinrichtung am vordere Ende (51) des Ansatzteil-Körpers (10) verschiebbar zwischen einer vorderen Längsposition, in der sie zum Schutz des abgemantelten Faserendes (9) vor der Verbindung dient, und einer rückwärtigen Längsposition, in der sie zum Freilegen des abgemantelten Endes der Faser während des Einsetzens des Ansatzteils (1) in das Verbindungsgehäuse bestimmt ist, angebracht ist, und wobei der genannte Körper mit einer ringförmigen Schulter (54) zur Begrenzung des Ausfahrweges der Schutzeinrichtung in der vorderen Längsposition versehen ist, **dadurch gekennzeichnet,** daß der Befestigungsring und die Schutzeinrichtung als ein gemeinsames rohrförmiges Teil (4) ausgebildet sind, das beweglich um den Ansatzteil-Körper herum montiert ist und erste Rastmittel (17) zu seiner Befestigung am Verbindungsgehäuse in der Verbindungsposition sowie zweite Rastmittel (18) zum Zusammenwirken mit einer äußeren ringförmigen Rippe (52) des Ansatzteil-Körpers (10) in der rückwärtigen Längsposition des rohrförmigen Teiles derart aufweist, daß dieser Körper in der Verbindungsposition festgehalten wird.

2. Verbindungsvorrichtung für optische Fasern nach Anspruch 1, dadurch gekennzeichnet, daß das rohrförmige Schutz/Befestigungsteil (4) mit in rückwärtiger Richtung elastisch verformbaren Armen (53) versehen ist, die nach innen weisende Rasten (18) aufweisen, welche einerseits geeignet sind, in der rückwärtigen Längsposition mit der Rippe (52) zusammenzuwirken, und andererseits in der vorderen Längsposition an der Schulter (54) zur Anlage bringbar sind, wobei diese Resten (18) die zweiten Rastmittel bilden.

3. Vorrichtung nach Anspruch 1, dadurch gekennzeichnet, daß das rohrförmige Schutz/Bestigungsteil (4) in seinem Inneren eine Längsrippe (41) zum Gleiten in einer entsprechenden Längsnut (42) aufweist, die vorne am Ansetzteil-Körper (10) auf dessen Außenumfang ausgebildet ist.

4. Vorrichtung nach Anspruch 2, bei der das Verbindungsgehäuse (2) eine zylindrische Ausnehmung (12) zur Aufnehme des Ansatzteils (1) aufweist, die sich in einem konischen Teil (16) und einem axialen, in die Unterbaugruppe zum Zentrieren mündenden Durchgang (45) fortsetzt, dadurch gekennzeichnet, daß der Ansatzstück-Körper (10) in Anschlag gegen die Bodenwand (15) der zylindrischen Aussparung (12) bringbar ist und der axiale Durchgang (45) einen verkleinerten Durchmesser aufweist, durch den nur eine einzige abgemantelte Faser hindurchlaufen kann.

5. Vorrichtung nach Anspruch 4, dadurch gekennzeichnet, daß die Längsachse der zylindrischen Aussparung (12) um einen kleinen Winkel gegenüber der Längsachse der Unterbaugruppe (19) zum Zentrieren geneigt ist.

6. Vorrichtung nach Anspruch 5, dadurch gekennzeichnet, daß der Nejgungswinkel (α) in der Größenordnung von 2° ist.

7. Vorrichtung nach Anspruch 1, bei der das Verbindungsgehäuse eine zum Unterbringen der Unterbaugruppe zum Zentrieren bestimmte Ausnehmung aufweist, dadurch gekennzeichnet, daß das Gehäuse (2) seitlich eine Öffnung (46) zum Einführen dieser Unterbaugruppe ausbildet.

8. Vorrichtung nach Anspruch 1, dadurch gekennzeichnet, daß die Unterbaugruppe (19) zum Zentrieren mechanische Zentriermittel und eine viskose Adapterflüssigkeit (23) für eine Anzeige aufweist.

9. Vorrichtung nach Anspruch 8, dadurch gekennzeichnet, daß die Zentriermittel von drei bearbeiteten Stäben (34) einer im wesentlichen zylindrischen Form gebildet sind, die mit Querschnittseinschnürungen (39, 40) versehen sind.

10. Vorrichtung nach Anspruch 9, dadurch gekennzeichnet daß die Stäbe (34) konische Enden zur Führung der Fasern (9) und zum Zurückhalten der Adapterflüssigkeit (23) für die Anzeige aufweisen.

11. Vorrichtung nach Anspruch 8, dadurch gekennzeichnet, daß die Zentriermittel von einer Form-Längsnut mit V-förmigem Querschnitt (43) gebildet werden, bei der an jedem Ende drei Kugeln zur Führung der Faser in dem V angebracht sind.

12. Vorrichtung nach Anspruch 1, dadurch gekennzeichnet, daß das Verbindungsgehäuse (2) unten einen Ansatz (24) aufweist, der mit geeigneten Rasten (25) zur Befestigung auf einem schienenförmigen Träger für die Aufnahme einer Reihe von Gehäusen versehen ist.
